# EUROPEAN PATENT APPLICATION

(11) **EP 3 561 259 A1**
(43) Date of publication of application: **30.10.2019**
(21) Application number: 19156798.1
(22) Date of filing: 12.02.2019
(51) Int. Cl.: F02B 37/16, F02B 37/013, F02B 39/10, F02B 37/04, F02D 41/00, F02B 33/44, F02B 37/22, F02B 37/12

(54) **SYSTEM AND METHOD FOR PREVENTING THE COMPRESSOR SURGE IN AN INTERNAL COMBUSTION ENGINE PROVIDED WITH TWO COMPRESSORS**

(30) Priority: 14.02.2018 US 201815896297
(71) Applicant: BorgWarner Inc., Auburn Hills, MI 48326 (US)
(72) Inventor: SHUTTY, John, Clarkston, MI Michigan 48346 (US)
(74) Representative: Peterreins Schley

(57) **Abstract**

An engine system (10) having an engine (12), a compound boosting system (1000) in communication with the engine (12), the compound boosting system (1000) including a first booster (100) and a second booster (200) positioned downstream of the first booster (100). A variable valve (300) is operable as both a recirculation valve and a bypass valve, the variable valve (300) being configured, dimensioned, and positioned such that, when the second booster (200) is running, the variable valve (300) can be moved from a closed position, wherein air flows in a single downstream direction through the second booster (200), to an open position, wherein air flows downstream through the second booster (200) and upstream through the variable valve (300) such that air is recirculated from adjacent an outlet (206) of the second booster (200) to an inlet (204) of the second booster (200) through the variable valve (300) to mitigate surge, or a likelihood of surge, in the second booster (200).

## Description

### TECHNICAL FIELD

The present disclosure relates to surge control systems and methods for internal combustion engines, and in particular, a compound boosting system of an internal combustion engine that utilizes a variable valve to adjust the amount of compressed air to the internal combustion engine to increase the power and performance of the internal combustion engine.

### BACKGROUND

Many internal combustion engine systems include boosting devices, such as turbochargers and superchargers, which compress air to increase air flow and thus improve power and performance of an internal combustion engine. However, it is well known that compressors are subject to "surge," which refers to an unstable condition in which the air pressure downstream of the compressor exceeds the pressure that the compressor can physically maintain. While surge does not typically result in catastrophic damage, it has several undesirable effects including negative air flow, compressor stall, engine noise, etc.

Various systems and methodologies have been developed to combat compressor surge. For example, some systems utilize a dedicated recirculation valve to increase airflow. Known systems and methodologies, however, fail to disclose the use of a multifunctional valve that is operable as both a bypass valve and a recirculation valve to address surge in a compressor.

### SUMMARY

In one aspect of the present disclosure, an engine system is disclosed that includes an engine and a compound boosting system in communication with the engine. The compound boosting system includes a first booster and a second booster positioned downstream of the first booster. A variable valve is operable as both a recirculation valve and a bypass valve wherein the variable valve is configured, dimensioned, and positioned such that, when the second booster is running, the variable valve can be moved from a closed position, wherein air flows in a single downstream direction through the second booster, to an open position, wherein air flows downstream through the second booster and upstream through the variable valve such that air is recirculated from adjacent an outlet of the second booster to an inlet of the second booster through the variable valve to mitigate surge, or a likelihood of surge, in the second booster.

In certain embodiments, the first booster is configured as a turbine-driven booster, and the second booster is configured as an electric booster.

In certain embodiments, the first booster is configured as a turbocharger, and the second booster is configured as a supercharger.

In certain embodiments, the first booster includes a first compressor positioned in a flow path of incoming air, wherein the first compressor has an inlet and an outlet. A shaft is connected to the first compressor, and a turbine is connected to the shaft. The turbine is positioned in a flow path of exhaust created by the engine such that the exhaust rotates the turbine to thereby cause rotation of the first compressor via the shaft, wherein rotation of the first compressor causes first stage compression of the incoming air.

In certain embodiments, the second booster further includes a power source in communication with the electric motor.

In certain embodiments, the power source is a battery.

In certain embodiments, the engine system further includes an intercooler positioned downstream of the first booster and upstream of the second booster.

In certain embodiments, the engine systems includes the variable drive movable between a fully closed position and one or more open positions.

In certain embodiments, the engine system may further include the variable valve configured, dimensioned, and positioned such that in the open positions, when the second booster is not running, compressed air exiting the first booster can flow into the engine: (i) through the second booster; and/or (ii) around the second booster.

In certain embodiments, the engine system may further include the variable valve configured, dimensioned, and positioned such that in the fully closed position, when the second booster is running, compressed air exiting the first booster flows into the second booster for additional compression before flowing into the engine.

In certain embodiments, the engine system may further include the variable valve configured, dimensioned, and positioned for movement between a first partially open position and a second partially open position, wherein air flow through the variable valve is greater in the second partially open position.

In another aspect of the present disclosure, an engine system is disclosed that includes a controller in communication with the variable valve to vary a position of the variable valve and thereby regulate air flow through the variable valve and into the engine.

In certain embodiments, the engine system further includes one or more sensors in communication with the controller, the one or more sensors being adapted to collect and transmit data to the controller including information concerning operating conditions of the engine system, the controller being adapted and programmed to: (i) process the data received from the one or more sensors to determine whether surge has occurred or is likely to occur in the second booster; and (ii) transmit a signal to the variable valve to move the variable valve from the closed position to open position to facilitate air recirculation from adjacent the outlet of the second booster to the inlet of the second booster through the variable valve.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a schematic view of an engine system including a turbine-driven compressor an electric compressor positioned downstream of the turbine-driven compressor in accordance with the principles of the present disclosure; and
FIG. 2 illustrates a flow chart for a routine that may be executed to reduce surge in the electric compressor.

### DETAILED DESCRIPTION

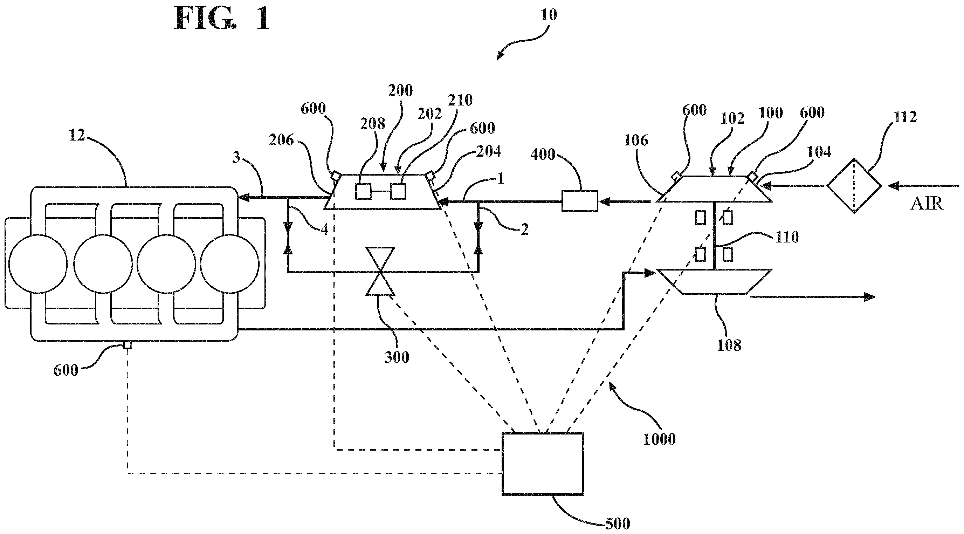

Various embodiments of the present disclosure will now be described in detail with reference to the figures, wherein like references numerals identify similar or identical elements. With reference now to FIG. 1, an internal combustion engine system 10 is disclosed that includes, among other components, an internal combustion engine 12, a compound boosting system 1000 including a first, turbine-driven booster 100 and a second, electric booster 200, such as the eBooster® made available by Borg Warner, and a variable valve 300. It is also envisioned that the system 10 may include an optional intercooler 400, such as an air-to-air or air-to-water heat exchanger. The turbine-driven booster 100 provides a first stage compression to incoming air, and the electric booster 200 provides optional a second stage compression prior to the flow of air into the engine 12. As discussed below, the variable valve 300 is configured, dimensioned, and positioned to modulate airflow into the electric booster 200 in order to mitigate surge and improve the overall performance of the engine system 10.

In the embodiment of the internal combustion engine system 10 seen in FIG. 1, the first booster 100 is configured as a turbocharger of the internal combustion engine 12, and the second booster 200 is configured as an electric supercharger of the internal combustion engine 12. In alternate embodiments, however, it is envisioned that the specific configurations of the boosters 100, 200 may be altered or varied without departing from the scope of the present disclosure.

The first booster 100 receives a flow of incoming air and is positioned upstream of the second booster 200. The first booster 100 includes a compressor 102 having respective inlets and outlets 104, 106, a turbine 108, and a shaft 110 that interconnects the compressor 102 and the turbine 108. The turbine 108 is positioned downstream of the internal combustion engine 12 in the path of exhaust gases produced by the engine 12 such that as the engine 12 operates, the exhaust gases produced flow into and spin the turbine 108. The rotational energy of the turbine 108 is communicated to the compressor 102 by the shaft 110 to rotate the compressor 102 thereby compressing the incoming flow of air after passing through an air filter 112.

The second booster 200 includes a compressor 202 having respective inlets and outlets 204, 206, and may operate concurrently with the first booster 100. The second booster 200 is driven by an electric motor 208, which may be powered in any suitable manner, such as by an on-board energy storage device, e.g., a battery 210, a generator, or a combination thereof. In certain embodiments, such as that illustrated in FIG. 1, the second booster 200 may be positioned downstream of the first booster 100 such that compressed air exiting the first booster 100 may be optionally subjected to additional compression, for example, dependent upon the demand placed on the engine 12, as will be discussed in further detail below.

With continued reference to FIG. 1, the valve 300 is a continuously variable, multifunctional valve that is operable as both a bypass valve and a recirculation valve movable between a fully open position, a fully closed position, and one or more partially open positions. When the valve 300 is open, the valve 300 acts as a conduit through which air flows. For example, when the second booster 200 is not in operation, compressed air exiting the first booster 100 is allowed to flow through the valve 300 in the direction indicated by arrow 2, around the second booster 200, and enter the engine 12 directly. Thus, in the open position(s), the valve 300 performs generally as a bypass valve allowing air to be diverted around the second booster 200. While it is envisioned that a portion of the air exiting the first booster 100 may flow through the second booster 200 when the second booster 200 is not in operation, the open conduit provided by the valve 300 offers far less restriction on air flow. By contrast, when the second booster 200 is in operation, the valve 300 can be fully closed to ensure that air exiting the first booster 100 is directed/drawn into the second booster 200 (in the direction indicated by arrow 1) for additional, second stage compression before flowing into the engine 12 in the direction indicated by arrow 3.

The ability to reposition the valve 300 between a plurality of open position(s) allows air flow through the valve 300 to be regulated. More specifically, air flow can be progressively increased or decreased to augment or reduce the amount of air flowing through the valve 300, for example, based upon desired performance of the engine 12 or surge conditions, as discussed below.

Under certain operating conditions, air flow through the second booster 200 may be reduced, potentially resulting in surge conditions that can degrade performance of the compressor 202, and consequently, the engine 12. Such conditions typically occur during high power/low flow operation, such as, for example, during a hard acceleration or during operation of the engine 12 in an improperly high gear in the transmission (not shown). During surge conditions, due to the low flow of air into the compressor 202, pressure at the outlet 206 exceeds pressure at the inlet 204 to such an extent that a reversal of air flow through the compressor 202 can occur in which air attempts to flows "upstream" through the compressor 202 from the area of higher pressure (at the outlet 206) to the area of lower pressure (at the inlet 204). To mitigate the negative impact of such a flow reversal, the valve 300 can be moved into one of the open positions in order to redirect and recirculate the air flowing "upstream" into the inlet 204 of the compressor 202. More specifically, by opening the valve 300, an alternate path is created that allows air to be recirculated for flow into the inlet 204 (in the direction indicated by arrow 4) to increase pressure at the inlet 204. By increasing pressure at the inlet 204, the pressure differential at the outlet 206 and the inlet 204 can be reduced, thereby mitigate surge. During such operation, as the valve 300 moves from the closed position to one of the open positions, the role played by the valve 300 thus changes from one of bypass to one of recirculation.

To monitor, evaluate, and combat surge conditions, the engine system 10 may include a controller 500 and one or more sensors 600. The controller 500 is adapted and programmed to receive data from the sensor(s) 600, process the data, and transmit signals to carry out various tasks, such as one or more routines programmed into the logic of the controller 500 to perform certain functions. For example, based on the data collected by the sensor(s) 600 and the calculations performed by the controller 500, the controller 500 may vary operation of the engine 12, activate or deactivate the second booster 200, transmit a signal to vary the position of the valve 300 between the closed position and one of the open positions, thereby altering the flow of air through the second booster 200, etc.

The sensor(s) 600 included in the internal combustion engine system 10 may include several varieties and may be positioned in various locations to collect data pertaining to the operating conditions of the internal combustion engine system 10. For example, the internal combustion engine system 10 may include one or more sensors 600 to measure or estimate temperature at the respective inlets 104, 204 of the compressors 106, 206, to measure the pressure at various locations, such as at the respective outlets 106, 206 of the compressors 102, 202, to determine the air-fuel ratio in the engine 12, to measure the levels of humidity, engine speed, fueling, load, etc.

After receiving data collected by the sensor(s) 600, the controller 500 can process the data to vary operation of the internal combustion engine system 10. For example, in one set of operating conditions, as the engine 12 runs, the exhaust gases build up and ultimately act on the turbine 108 of the first booster 100. However, in the interval of time between the initiation of engine operation and the initiation of spin in the turbine 108, there may be a delay in the communication of energy to the compressor 102 of the first booster 100, commonly referred to a "turbo lag." To compensate for this delay and reduce or minimize the impact upon performance of the internal combustion engine system 10, the controller 500 may transmit a signal to actuate the second booster 200 to increase the pressure and compression of air entering the engine 12 while the compressor 102 comes up to speed based upon the pressure measured by a sensor 600 at the outlet 106 of the compressor 102 of the first booster 100. During such operation, the controller 500 may close the valve 300 such that air is directed into the second booster 200 prior to entering the engine 12. However, after the turbine 108 of the first booster 100 has achieved sufficient rotational speed in order to generate adequate compression by the compressor 102, as measured by a sensor 600 at the outlet 106 of the compressor 102, the controller 500 may either deactivate the second booster 200 and open the valve 300 such that air compressed by the first booster 100 passes directly into the engine 12, or alternatively, the controller 500 may maintain the closed position of the valve 300 such that air exiting the compressor 102 of the first booster 100 undergoes a second stage of compression by the booster 206 to further increase the power produced by the engine 12.

During operation of the engine 12, the position of the valve 300 can be continually varied by the controller 500 depending on the operating conditions measured by the sensor(s) 600. When the controller 500 recognizes surge, or conditions that may result in surge, the controller 500 can vary the exact position of the valve 300, for example, by moving the valve 300 from the closed position to one of the open positions, or by increasing the opening of the valve, in order to control air flow into the second booster 200 based on data collected by the sensors 600 relating to compressor ratio, compressor flow rate, pressure differentials, etc. When pressure measured at the outlet 206 of the second booster 200 exceeds pressure measured at the inlet 204 by a certain amount or percentage, such as a ratio within the range of 1.25 to 3 or more, the controller 500 can open the valve 300 to permit the recirculation of air into the inlet 204 to reduce the pressure differential, as discussed above. When surge or surge conditions are not identified by the controller 500, however, such as when pressures at the outlet 206 and the inlet 204 are within a certain tolerance, for example, the valve 300 may remain closed such that air is continuously drawn into the second booster 200. The controller 500 may thus be programmed to vary functionality of the valve 300 between bypass and recirculation operations.

Dependent upon the particular operating conditions, it is envisioned that the controller 500 may open the valve 300 such that air, or a portion of the air, bypasses the second booster 200 to thereby limit compression in order to achieve a particular output by the engine 12. It is also envisioned that the controller 500 may close the valve 300 to maximize air flow into the second booster 200 to increase compression and power generated by the engine 12.

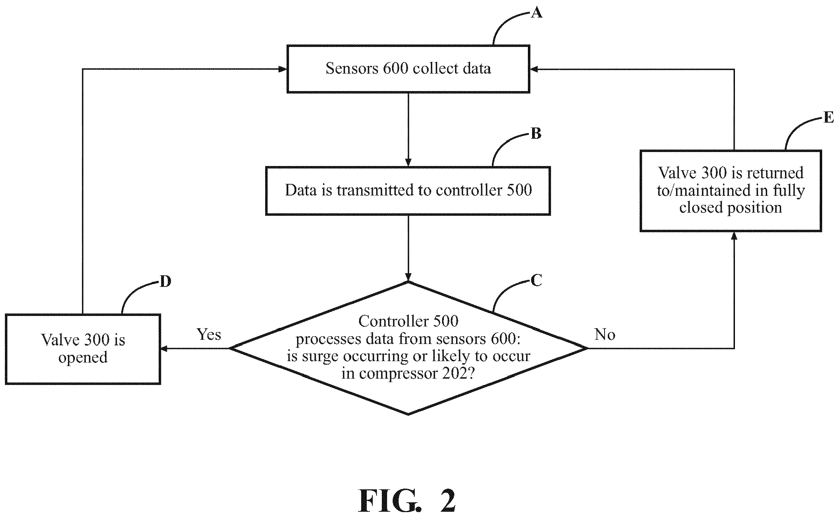

With reference to FIG. 2, a control methodology for regulating air flow through the internal combustion engine system 10 will be discussed in which surge in the second booster 200 is identified and addressed. The routine reflected in FIG. 2 may be executed based on instructions and logic programmed into the controller 500, and the receipt of data from the sensor(s) 600 discussed above.

At step "A", various operating conditions are estimated and/or measured by the sensor(s) 600, such as the charge in the battery 210, pressure at the inlet 204 of the compressor 202, pressure at the outlet 206 of the compressor 202, etc. Data collected by the sensor(s) 600 is then communicated to the controller 500 at step "B", and the controller 500 evaluates whether surge is either likely to occur, or whether the compressor 202 is presently experiencing surge at step "C". If it is determined by the controller 500 that the compressor 202 is not experiencing surge or that the compressor 202 is not likely to experience surge, the position of the valve 300 can be maintained in (or returned to) the fully closed position at step "E", and the routine then repeats steps "A"-"C" to continually monitor the conditions of the engine 12. However, if it is determined by the controller 500 at step "C" that the compressor 202 is either presently experiencing surge or that the compressor 202 is likely to experience surge, the controller 500 can transmit a signal to the valve 300 at step "D" to transition the valve 300 from the fully closed position to one of the partially open conditions. Following repositioning of the valve 300, the controller 500 and the sensors 600 may continually monitor the conditions of the engine 12 by repeating steps "A"-"C" to determine whether surge was successfully addressed by opening the valve 300. If it is determined that surge either has not been successfully addressed, based upon data collected by the sensor(s) 600 subsequent to initial opening of the valve 300, the controller 500 can either maintain the open position of the valve 300 or open the valve 300 further at step "D" to increase air flow into the compressor 202. Steps "A"-"C" can then be repeated to collect and process additional data until such time that the controller 500 determines that surge in the compressor 202 of the second booster 200 has been successfully addressed.

Persons skilled in the art will understand that the various embodiments of the disclosure described herein, and shown in the accompanying figures, constitute non-limiting examples, and that additional components and features may be added to any of the embodiments discussed herein above without departing from the scope of the present disclosure. Additionally, persons skilled in the art will understand that the elements and features shown or described in connection with one embodiment may be combined with those of another embodiment without departing from the scope of the present disclosure and will appreciate further features and advantages of the presently disclosed subject matter based on the description provided. Variations, combinations, and/or modifications to any of the embodiments and/or features of the embodiments described herein within the abilities of a person having ordinary skill in the art are also within the scope of the disclosure, as are alternative embodiments that may result from combining, integrating, and/or omitting features from any of the disclosed embodiments. For example, in alternate embodiments, the inclusion, order, and arrangement of the components discussed herein may be varied. For instance, in alternate embodiments, the second (electric) booster 200 may be located upstream of the first booster 100, the location of the intercooler 400 may be varied, or the intercooler 400 and/or the first booster 100 may be eliminated altogether.

## Claims

1. An engine system (10), comprising:
an engine (12);
a compound boosting system (1000) in communication with the engine (12), the compound boosting system (1000) including a first booster (100), and a second booster (200) positioned downstream of the first booster (100); and
a variable valve (300) operable as both a recirculation valve and a bypass valve, the variable valve (300) being configured, dimensioned, and positioned such that, when the second booster (200) is running, the variable valve (300) can be moved from a closed position, wherein air flows in a single downstream direction through the second booster (200), to an open position, wherein air flows downstream through the second booster (200) and upstream through the variable valve (300) such that air is recirculated from adjacent an outlet (206) of the second booster (200) to an inlet (204) of the second booster (200) through the variable valve (300) to mitigate surge, or a likelihood of surge, in the second booster (200).

2. The engine system (10) of claim 1, wherein the first booster (100) is configured as a turbine-driven booster and the second booster (200) is configured as an electric booster.

3. The engine system (10) according to any preceding claim, wherein the first booster (100) is configured as a turbocharger, and the second booster (200) is configured as a supercharger.

4. The engine system (10) according to any preceding claim, wherein the first booster (100) includes:
a first compressor (102) positioned in a flow path of incoming air, the first compressor (102) having an inlet (104) and an outlet (106);
a shaft (110) connected to the first compressor (102); and
a turbine (108) connected to the shaft (110), the turbine (108) being positioned in a flow path of exhaust created by the engine (12) such that the exhaust rotates the turbine (108) to thereby cause rotation of the first compressor (102) via the shaft (110), wherein rotation of the first compressor (102) causes first stage compression of the incoming air.

5. The engine system (10) of claim 4, wherein the second booster (200) includes:
a second compressor (202); and
an electric motor (208) in communication with the second compressor (202) to rotate the second compressor to cause second stage compression of compressed air exiting the first booster (100).

6. The engine system (10) of claim 5, wherein the second booster (200) further includes a power source (210) in communication with the electric motor (208).

7. The engine system (10) of claim 6, wherein the power source (210) is a battery.

8. The engine system (10) according to any preceding claim, further including an intercooler (400) positioned downstream of the first booster (100) and upstream of the second booster (200).

9. The engine system (10) according to any preceding claim, wherein the variable valve (300) is positioned in a flow path of compressed air exiting the first booster (100).

10. The engine system (10) according to any preceding claim, wherein the variable valve (300) is movable between a fully closed position, and one or more open positions.

11. The engine system (10) of claim 10, wherein the variable valve (300) is configured, dimensioned, and positioned such that in the open positions, when the second booster (200) is not running, compressed air exiting the first booster (100) can flow into the engine (12): (i) through the second booster (200); and/or (ii) around the second booster (200).

12. The engine system (10) according to claims 10 or 11, wherein the variable valve (300) is configured, dimensioned, and positioned such that in the fully closed position, when the second booster (200) is running, compressed air exiting the first booster (100) flows into the second booster (200) for additional compression before flowing into the engine (12).

13. The engine system (10) according to any of claims 10 to 12, wherein the variable valve (300) is configured, dimensioned, and positioned for movement between a first partially open position and a second partially open position, wherein air flow through the variable valve (300) is greater in the second partially open position.

14. The engine system (10) according to any preceding claim, further including a controller (500) in communication with the variable valve (300) to vary a position of the variable valve (300) and thereby regulate air flow through the variable valve (300) and into the engine (12).

15. The engine system (10) according to claim 14, further including one or more sensors (600) in communication with the controller (500), the one or more sensors (600) being adapted to collect and transmit data to the controller (500) including information concerning operating conditions of the engine system (10), the controller (500) being adapted and programmed to: (i) process the data received from the one or more sensors (600) to determine whether surge has occurred or is likely to occur in the second booster (200); and (ii) transmit a signal to the variable valve (300) to move the variable valve (300) from the closed position to open position to facilitate air recirculation from adjacent the outlet (206) of the second booster (200) to the inlet (204) of the second booster (200) through the variable valve (300).
